# NEUE EUROPÄISCHE PATENTSCHRIFT

(11) **EP 1 151 660 B2**
(45) Veröffentlichungstag und Bekanntmachung des Hinweises auf die Entscheidung über den Einspruch: **18.06.2008**
(45) Hinweis auf die Patenterteilung: 01.09.2004
(21) Anmeldenummer: 01110708.3
(22) Anmeldetag: 02.05.2001
(51) Int. Cl.: A01F 29/14

(54) **Erntemaschine, insbesondere selbstfahrender Feldhäcksler**
Harvester especially self-propelled forage harvester
Récolteuse en particulier faucheuse-hacheuse automotrice

(30) Priorität: 04.05.2000 DE 10021658
(43) Veröffentlichungstag der Anmeldung: 07.11.2001
(73) Patentinhaber: Maschinenfabrik Bernard Krone GmbH, 48480 Spelle (DE)
(72) Erfinder: Krone, Bernard, Dr.-Ing. E.H., 48480 Spelle (DE); Radke, Karl-Heinz, Dipl.-Ing., 02681 Wilthen (DE)
(74) Vertreter: Busse & Busse Patentanwälte

(56) Entgegenhaltungen:
- EP-A- 0 848 902
- DD-A- 219 651
- DE-A- 19 606 388
- DE-C- 3 722 367
- US-A- 3 469 381
- US-A- 4 009 556

## Beschreibung

Die Erfindung betrifft eine Erntemaschine, insbesondere einen selbstfahrenden Feldhäcksler für die Ernte von Mais, Anwelkgras, Grünfutter und dergleichen Erntegut nach dem Oberbegriff des Anspruchs 1. An der Vorderfront der Maschine ist ein in der Regel auswechselbares Vorsatzgerät, z. B. ein Maisgebiß für die Ernte von Mais oder eine Pickup für die Aufnahme von Gras oder anderem Halmschnittmaterial angeordnet. Nach dem Vorsatzgerät durchläuft das Erntegut eine Zuführeinrichtung, die für einen Weitertransport des Ernteguts zu einer Bearbeitungseinrichtung, beispielsweise einer Häckseltrommel, sorgt. Das Erntegut durchläuft dann ggf. eine weitere Bearbeitungseinrichtung, z. B. einen sogenannten Cracker zum Anquetschen von Maiskörnern und wird schließlich von der Erntemaschine in den Laderaum eines Begleitfahrzeugs abgegeben. Das Vorsatzgerät, die Zuführeinrichtung und die Bearbeitungseinrichtung weisen rotierende Teile auf und sind motorisch angetrieben. Die Häckseltrommel wird im Betrieb meist gleichzeitig mit der ebenfalls angetriebenen Vorderachse der Erntemaschine angetrieben. Da der Antrieb auch von demselben Antriebsaggregat aus erfolgt, ist daher eine Lagerung der Häckseltrommel im Bereich der Vorderachse üblich. Die der Bearbeitungseinrichtung vorgeordnete Zuführeinrichtung und das Vorsatzgerät befinden sich entsprechend vor der Vorderachse.

Bei in der Praxis bekannten Feldhäckslern erfolgt der Antrieb des Vorsatzgerätes und der Zuführeinrichtung über eine Abzweigung vom Antrieb der Häckseltrommel. Das Vorsatzgetriebe und das Zuführgetriebe sind daher ebenfalls vor der Vorderachse der Erntemaschine angeordnet. Da die Maschine zur Erzielung einer möglichst günstigen Gewichtsverteilung nach vorne nicht beliebig verlängert werden kann, ist der Bauraum vor der Vorderachse bereits durch die Zuführeinrichtung und die Aggregate zur Aufnahme des Vorsatzgerätes eng belegt. Die Anordnung des Vorsatzgetriebes und des Zuführgetriebes ebenfalls in diesem Bereich erschwert daher die Zugänglichkeit zu den übrigen Maschinenteilen und auch zu den Getrieben selbst, wenn an ihnen Wartungsarbeiten vorgenommen werden müssen. Außerdem liegen die Getriebe in diesem Bereich nahezu ungeschützt und können daher leicht durch Fremdkörper, z. B. Steine beschädigt werden.

Die DE 196 06 388 A1 offenbart einen Feldhäcksler, bei dem die Antriebe für das Vorsatzgerät und für die Zuführeinrichtung separat von dem Hauptantrieb der Maschine abgezweigt sind und die beiden Getriebe für das Vorsatzgerät und die Zuführeinrichtung an verschiedenen Seiten des Feldhäckslers angeordnet sind. Dabei befindet sich das Getriebe für die Zuführeinrichtung seitlich von dieser vor der Vorderachse, während das Vorsatzgetriebe zwischen der Vorder- und der Hinterachse plaziert ist. Diese weit voneinander entfernte Anordnung von Vorsatzgetriebe und Zuführgetriebe erfordert unterschiedliche Arten der Kraftübertragung vom jeweiligen Getriebe zum jeweils angetriebenen Aggregat und verkompliziert dadurch den Aufbau der Erntemaschine. Die Erntemaschine wird so in ihrer Mechanik unübersichtlich, so daß eventuelle Wartungsarbeiten überwiegend nur noch von entsprechenden Fachleuten durchgeführt werden können.

Die Erfindung befaßt sich daher mit dem Problem, eine gattungsgemäße Erntemaschine im Hinblick auf die Antriebe für das Vorsatzgerät und die Zuführeinrichtung konstruktiv zu vereinfachen und zu verbessern.

Dieses Problem wird erfindungsgemäß durch eine Erntemaschine mit den Merkmalen des Anspruchs 1 gelöst. Durch die Anordnung sowohl des Vorsatzgetriebes als auch des Zuführgetriebes in Fahrtrichtung betrachtet hinter der Vorderachse wird der mit Bauteilen sehr eng besetzte Bereich vor der Vorderachse entlastet. Vorsatzgetriebe und Zuführgetriebe sind so in einem gut zugänglichen und übersichtlichen Bereich der Erntemaschine angeordnet und durch die Vorderachse und Rahmenteile weitestgehend gegen Fremdkörpereinwirkung geschützt. Außerdem wird durch die Anordnung der beiden Getriebe hinter der Vorderachse der Schwerpunkt der Erntemaschine nach hinten verschoben. Dies ist vorteilhaft, da gattungsgemäße Erntemaschinen wegen der Vielzahl vor der Vorderachse angebrachter Baugruppen, insbesondere wegen des häufig sehr schweren Vorsatzgerätes, z. B. eines Maisgebisses, einen hohen Gewichtsanteil, die Stabilität ungünstig beeinflussend vor der Vorderachse tragen. Durch die erfindungsgemäße Anordnung wird somit eine bessere Masseverteilung der Erntemaschine erreicht.

Weitere Vorteile und Einzelheiten ergeben sich aus den Unteransprüchen und einem in den Zeichnungen dargestellten Ausführungsbeispiel der Erfindung, das im folgenden erläutert wird; es zeigen:
- Fig. 1:: eine Seitenansicht einer Erntemaschine,
- Fig. 2:: eine Detailvergrößerung des Vorderachsbereichs des Gegenstands aus Fig. 1 mit nicht dargestelltem linken Vorderrad und
- Fig. 3:: eine vergrößerte Darstellung des Ausschnitts III aus Fig. 2.

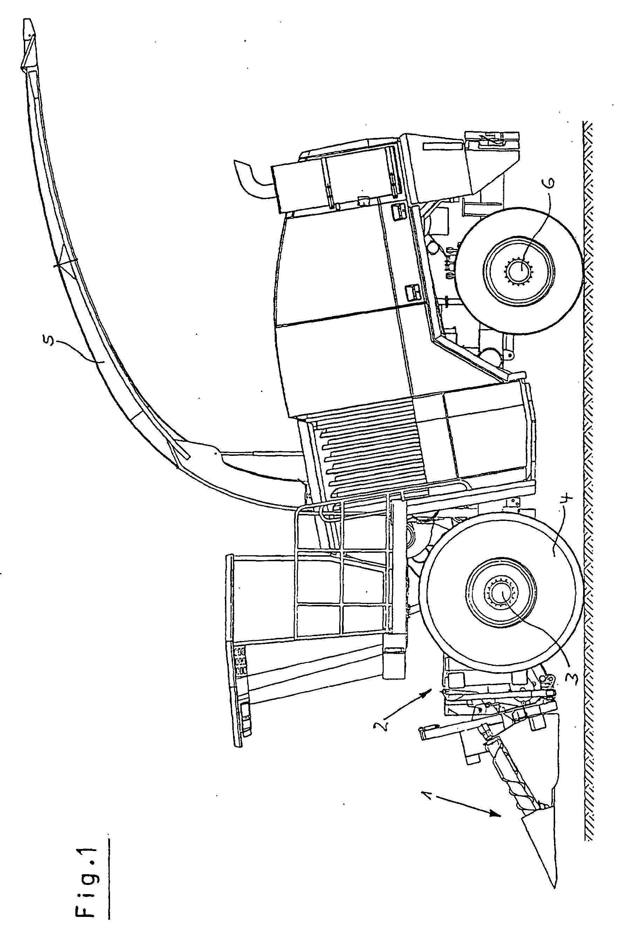

Bei der in Fig. 1 dargestellten Erntemaschine handelt es sich um einen selbstfahrenden Feldhäcksler, der im abgebildeten Zustand für die Maisernte mit einem Maisgebiß 1 als Vorsatzgerät versehen ist. An das Maisgebiß 1 schließt sich eine Zuführeinrichtung 2 an. Im Bereich der Vorderachse 3 befindet sich eine in der Darstellung in Fig. 1 durch das linke Vorderrad 4 verdeckte Häckseltrommel, in der das Erntegut zerkleinert und schließlich durch einen Auswurfschacht 5 über die Hinterachse 6 der Erntemaschine hinaus oder seitlich in den Laderaum eines nicht dargestellten Begleitfahrzeugs oder Anhängers abgegeben wird.

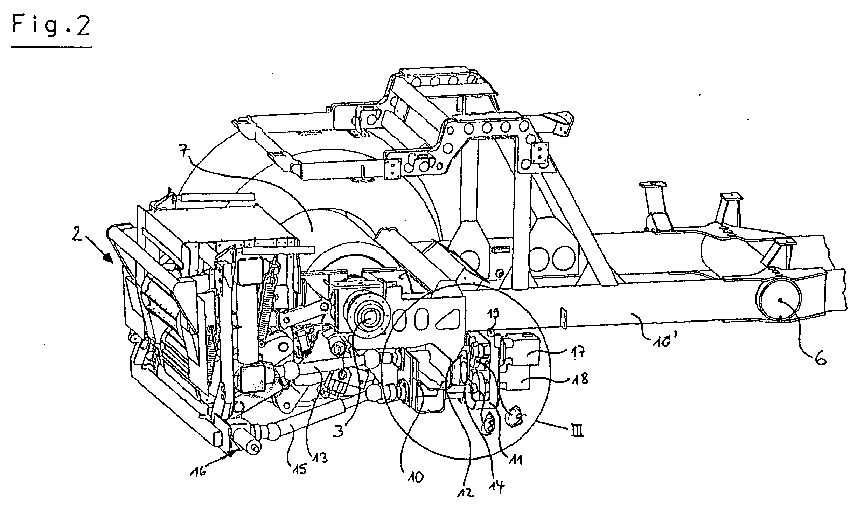

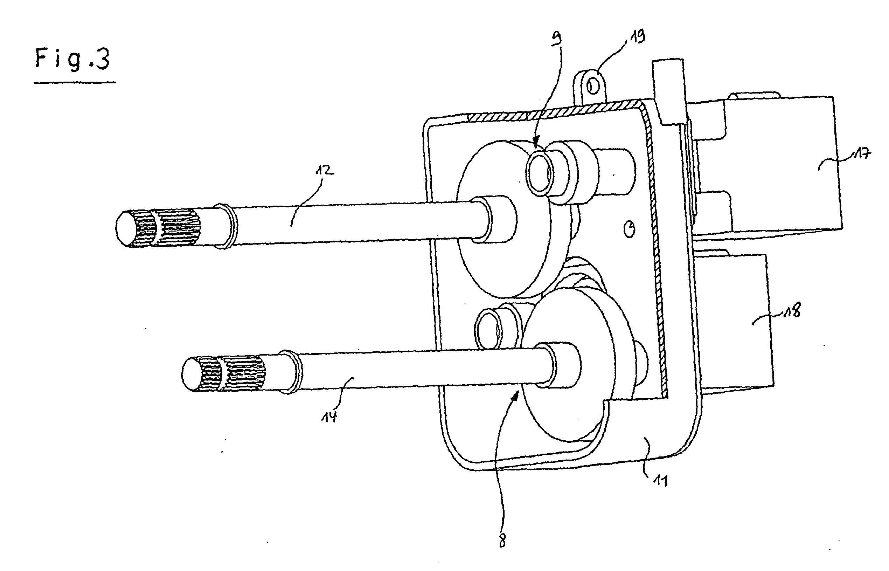

In Fig. 2, die Teile der Erntemaschine jedoch ohne das Vorsatzgerät zeigt, wurde das linke Vorderrad 4 entfernt, so daß der Blick auf die Zuführeinrichtung 2, die Häckseltrommel 7 und diverse Anordnungen zur Antriebsübertragung freigegeben ist. Erfindungsgemäß sind sowohl das Vorsatzgetriebe 8 als auch das Zuführgetriebe 9 hinter der Vorderachse 3 angeordnet. Beide Getriebe 8, 9 befinden sich dort in einem Bereich der Maschine, in dem ausreichend Bauraum zur Verfügung steht und in dem die Getriebe 8, 9 durch einen sich vor ihnen erstreckenden Rahmenquerholm 10 und einen oberhalb verlaufenden Rahmenlängsholm 10' verhältnismäßig geschützt sind. Vorzugsweise sind die Getriebe 8, 9 auf derselben Seite des Feldhäckslers in einem gemeinsamen Getriebegehäuse 11 angeordnet, das insbesondere in Fig. 3 erkennbar und zur Verdeutlichung teilweise aufgebrochen dargestellt ist. Dies erspart die einzelne Kapselung von Vorsatzgetriebe 8 und Zuführgetriebe 9 und ermöglicht neben der Material- und Raumersparnis falls gewünscht auch ein gemeinsames Ölbad für beide Getriebe 8, 9.

Das Zuführgetriebe 9 ist mit der Zuführeinrichtung 2 über eine sich aus einer Vorgelegewelle 12 und einer Gelenkwelle 13 zusammensetzenden Antriebswelle verbunden, wobei sich die Vorgelegewelle 12 durch den Rahmenquerholm 10 hindurcherstreckt und in diesem sowie in dem Getriebegehäuse 11 gelagert ist. Diese sehr stabile Lagerung und Anordnung ermöglicht eine sichere, schlupffreie Kraftübertragung. Die Kraftübertraung zum Vorsatzgerät erfolgt daher ebenfalls über eine aus einer weiteren Vorgelegewelle 14 und einer Gelenkwelle 15 zusammengesetzen Antriebswelle, wobei sich die an das Vorsatzgetriebe 8 angrenzende Vorgelegewelle 14 parallel zu der Vorgelegewelle 12 des Zuführgetriebes 9 durch den Rahmenquerholm 10 hindurch erstreckt und ebenfalls entsprechend gelagert ist. Da der Antrieb des Vorsatzgerätes an der diesem zugeordneten unteren Aufnahme 16 im vorderen Bereich der Erntemaschine erfolgt, sind die Vorgelegewelle 14 und die Gelenkwelle 15 bevorzugt unterhalb der Vorgelegewelle 12 und der Gelenkwelle 13 angeordnet, woraus sich auch eine Anordnung des Vorsatzgetriebes 8 unter dem Zuführgetriebe 9 ergibt.

Das Vorsatzgetriebe 8 und das Zuführgetriebe 9 sind voneinander getrennt ansteuerbar und derart aufgebaut, daß das Vorsatzgerät und die Zuführeinrichtung 2 auch unabhängig voneinander mit unterschiedlichen Geschwindigkeiten und Laufrichtungen angetrieben werden können. Über eine solche getrennte Reversibilität wird die Säuberung von Vorsatzgerät und Zuführeinrichtung 2 oder das Entfernen eventuell in diesen aufgenommener Fremdkörper erheblich erleichtert. Die Möglichkeit, Vorsatzgerät und Zuführeinrichtung 2 mit unterschiedlichen Geschwindigkeiten zu betreiben, erlaubt eine bessere Anpassung an die jeweiligen Verhältnisse des Bodens und des Ernteguts.

## Patentansprüche

1. Erntemaschine, insbesondere selbstfahrender Feldhäcksler zum Aufnehmen und Häckseln von Mais, Anwelkgras, Grünfutter und dergleichen Erntegut, mit einem vor einer Vorderachse (3) der Entemaschine angeordneten, von einem Motor über ein Vorsatzgetriebe (8) angetriebenen Vorsatzgerät (1) und einer dem Vorsatzgerät nachgeordneten, von einem Motor über ein Zuführgetriebe (9) angetriebenen Zuführeinrichtung (2), die das Erntegut einer Bearbeitungseinrichtung zuleitet, **dadurch gekennzeichnet, daß** das Vorsatzgetriebe (8) und das Zuführgetriebe (9) hinter der Vorderachse (3) der Erntemaschine angeordnet sind und daß das Vorsatzgerät und die Zuführeinrichtung (2) über das Vorsatzgetriebe (8) und das Zuführgetriebe (9) getrennt voneinander auch mit unterschiedlichen Geschwindigkeiten und verschiedenen Laufrichtungen antreibbar sind.

2. Erntemaschine nach Anspruch 1, **dadurch gekennzeichnet, daß** das Vorsatzgetriebe (8) und das Zuführgetriebe (9) in einem gemeinsamen Getriebegehäuse (11) angeordnet sind.

3. Erntemaschine nach Anspruch 1 oder 2, **dadurch gekennzeichnet, daß** das Vorsatzgetriebe (8) und das Zuführgetriebe (9) jeweils mit separaten Motoren (17,18) verbunden sind.

4. Erntemaschine nach einem der Ansprüche 1 bis 3, **dadurch gekennzeichnet, daß** es sich bei dem Motor (18) des Vorsatzgerätes und/oder dem Motor (17) der Zuführeinrichtung (2) um einen Hydraulikmotor handelt.

5. Erntemaschine nach einem der Ansprüche 1 bis 4, **dadurch gekennzeichnet, daß** das Zuführgetriebe (9) oberhalb des Vorsatzgetriebes (8) angeordnet ist.

6. Erntemaschine nach einem der Ansprüche 1 bis 5, **dadurch gekennzeichnet, daß** das Vorsatzgerät mit dem Vorsatzgetriebe (8) über zumindest eine Antriebswelle verbunden ist, die sich durch einen im Bereich der Vorderachse (3) angeordneten Rahmenquerholm (10) der Erntemaschine hindurch erstreckt.

7. Erntemaschine nach einem der Ansprüche 1 bis 6, **dadurch gekennzeichnet, daß** die Zuführeinrichtung (2) mit dem Zuführgetriebe (9) über zumindest eine Antriebswelle verbunden ist, die sich durch einen im Bereich der Vorderachse (3) angeordneten Rahmenquerholm (10) der Erntemaschine hindurch erstreckt.

8. Erntemaschine nach Anspruch 6 oder 7, **dadurch gekennzeichnet, daß** die Antriebswelle im Rahmenquerholm (10) gelagert ist.

## Claims

1. Harvester, especially self-propelled forage harvester for collecting and chopping maize, wilted grass, green forage and similar harvested materials, having an attachment (1) which is arranged in front of a front axle (3) of the harvester and which is driven by a motor via attachment gearing (8), and having an infeed arrangement (2) which is arranged downstream of the attachment, which is driven by a motor via infeed gearing (9), and which directs the harvested material to a processing arrangement, **characterised in that** the attachment gearing (8) and the infeed gearing (9) are arranged behind the front axle (3) of the harvester, and **in that** the attachment and the infeed arrangement (2) can be driven separately from one another via the attachment gearing (8) and the infeed gearing (9), including at different speeds and in different directions of rotation.

2. Harvester according to claim 1, **characterised in that** the attachment gearing (8) and the infeed gearing (9) are arranged in a common gear housing (11).

3. Harvester according to claim 1 or 2, **characterised in that** the attachment gearing (8) and the infeed gearing (9) are driven by separate respective motors (17, 18).

4. Harvester according to one of claims 1 to 3, **characterised in that** the motor (18) for the attachment and/or the motor (17) for the infeed arrangement (2) is a hydraulic motor.

5. Harvester according to one of claims 1 to 4, **characterised in that** the infeed gearing (9) is arranged above the attachment gearing (8).

6. Harvester according to one of claims 1 to 5, **characterised in that** the attachment is connected to the attachment gearing (8) via at least one drive shaft which extends through a cross-member (10) of the chassis of the harvester, which cross-member (10) is arranged in the region of the front axle (3).

7. Harvester according to one of claims 1 to 6, **characterised in that** the infeed arrangement (2) is connected to the infeed gearing (9) via at least one drive shaft which extends through a cross-member (10) of the chassis of the harvester, which cross-member (10) is arranged in the region of the front axle (3).

8. Harvester according to claim 6 or 7, **characterised in that** the drive shaft is bearing-mounted in the chassis cross-member (10).

## Revendications

1. Récolteuse, en particulier faucheuse-hacheuse automotrice pour recueillir et hacher du maïs, de l'herbe préfanée, du fourrage vert et des matières récoltées analogues, avec un outil adaptable avant (1) disposé devant l'essieu avant (3) de la récolteuse et entraîné par un moteur au moyen d'un engrenage (8) de l'outil adaptable avant et un dispositif d'alimentation (2), disposé derrière l'outil adaptable avant et entraîné par un moteur au moyen d'un engrenage d'alimentation (9), qui transfère la matière récoltée à un dispositif de traitement, **caractérisée en ce que** l'engrenage (8) de l'outil adaptable avant et l'engrenage d'alimentation (9) sont disposés derrière l'essieu avant (3) de la récolteuse et **en ce que** l'outil adaptable avant et le dispositif d'alimentation (2) peuvent être entraînés par l'engrenage (8) de l'outil adaptable avant et l'engrenage d'alimentation (9) séparément l'un de l'autre et également avec des vitesses différentes et dans des directions de marche différentes.

2. Récolteuse selon la revendication 1, **caractérisée en ce que** l'engrenage (8) de l'outil adaptable avant et l'engrenage d'alimentation (9) sont disposés dans un carter d'engrenage commun (11).

3. Récolteuse selon la revendication 1 ou 2, **caractérisée en ce que** l'engrenage (8) de l'outil adaptable avant et l'engrenage d'alimentation (9) sont respectivement reliés à des moteurs séparés (17, 18).

4. Récolteuse selon l'une quelconque des revendications 1 à 3, **caractérisée en ce que** le moteur (18) de l'outil adaptable avant et/ou le moteur (17) du dispositif d'alimentation (2) est un moteur hydraulique.

5. Récolteuse selon l'une quelconque des revendications 1 à 4, **caractérisée en ce que** l'engrenage d'alimentation (9) est disposé au-dessus de l'engrenage (8) de l'outil adaptable avant.

6. Récolteuse selon l'une quelconque des revendications 1 à 5, **caractérisée en ce que** l'outil adaptable avant est relié à l'engrenage (8) de l'outil adaptable avant au moyen d'au moins un arbre d'entraînement, qui s'étend à travers une traverse de châssis (10) de la récolteuse disposée dans la région de l'essieu avant (3).

7. Récolteuse selon l'une quelconque des revendications 1 à 6, **caractérisée en ce que** le dispositif d'alimentation (2) est relié à l'engrenage d'alimentation (9) au moyen d'au moins un arbre d'entraînement, qui s'étend à travers une traverse de châssis (10) de la récolteuse disposée dans la région de l'essieu avant (3).

8. Récolteuse selon la revendication 6 ou 7, **caractérisée en ce que** l'arbre d'entraînement est supporté dans la traverse de châssis (10).
